# EUROPEAN PATENT APPLICATION

(11) **EP 0 637 727 A2**
(43) Date of publication of application: **08.02.1995**
(21) Application number: 94110571.0
(22) Date of filing: 07.07.1994
(51) Int. Cl.: F28F 21/04, F28D 9/02

(54) **Cross-flow heat exchanger and method of forming**

(30) Priority: 05.08.1993 US 102205
(71) Applicant: Corning Incorporated, Corning New York 14831 (US)
(72) Inventor: Gardner, Robert William, Corning, NY 14831 (US); Lipp, George Daniel, Corning, NY 14831 (US); Kaysa, John Paul, Corning, NY 14831 (US); von Hagn, William Joseph, Corning, NY 14831 (US)
(74) Representative: Reinhard - Skuhra - Weise & Partner

(57) **Abstract**

A cross-flow heat exchanger (10) and a method for preparing a cross-flow heat exchanger is disclosed, in which first and second layers (12,14) having closed passageways (16) are stacked transversely and thereafter fired at a temperature and for a time sufficient to form a monolithic ceramic structure.

## Description

### FIELD OF THE INVENTION

The present invention relates to cross-flow heat exchangers and a method for producing them.

### Background of the Invention

Cross-flow heat exchangers are heat exchangers in which gas or fluid may flow in at least two directions through the heat exchanger. Such heat exchangers have a variety of uses, such as, for example, as catalytic converters, furnace heat recuperators, turbine engine recuperators, and for process fluid heating or cooling. The same structure may also be used as cross-flow filters or bleed-through reactors.

Heat exchangers are typically formed by first extruding a honeycomb like body of ceramic material from a die orifice. This extrusion results in a block of ceramic material having flow channels or cells which are typically of square or other rectangular cross-section, arranged parallel and adjacent to one another along the axis of extrusion.

Channels with Z-, L-, U- or similar cross-flow are typically made by sawing into the sides of some of the channels in the ceramic block and afterwards sealing the ends of these channels, see U.S. patents 4,271,110, 4,421,702 and 4,298,059.

To avoid leakage paths between channels, the extrusion and cutting must be extremely precise.

Also, non-straight paths make such heat exchangers more difficult to washcoat and/or catalyze and to inspect, as line of sight inspection is not possible.

Furthermore, greater pressure is needed, during routine engine operations, to force the fluid or gas through, and in automotives reduces engine performance.

Further, sawing into the side makes precise uniform cutting of the ends of the body very difficult, generating leakage paths between adjacent channels.

Cross-flow heat exchangers with straight channels in two directions are shown by U.S. Patents 4,083,400, 4,130,160, 3,854,186, 4,379,109, 4,362,209, sometimes being made by stacking alternating layers, each transverse to the preceding one. This is time consuming, and may deform the channels, especially when stacked green (unfired).

The present invention is directed to a cross-flow heat exchanger and a method for forming which avoids the deficiencies of prior art cross-flow heat exchangers and methods for forming.

### SUMMARY OF THE INVENTION

Basically the inventive method comprises:
contacting a first directional layer of fluid flow passages with a second directional layer of fluid flow passages, at least some of the passages of each of said first and second layers comprising closed passages disposed between two open and opposite ends, said first and second layers arranged so that the passages of the first layer are transverse to the passages of the second layer, thereby forming a layered structure; and
firing the layered structure at a temperature and for a time sufficient to form a monolithic ceramic structure.

The apparatus aspect of the invention comprises:
a first heat exchanger layer comprising at least a first channel layer and a second channel layer, said first channel layer comprising a plurality of channels arranged adjacent to one another in a first plane, said second channel layer comprising a plurality of channels arranged adjacent to one another in a second plane, said first plane adjacent to said second plane, the channels of said first layer parallel to the channels of said second layer,
a second heat exchanger layer comprising at least a third channel layer, said third channel layer comprising a plurality of channels arranged adjacent to one another in a third plane,
said first heat exchanger layer adjacent to said second heat exchanger layer, the channels of said first heat exchanger layer transverse to the channels of said second heat exchanger layer. Of course, in most instances the method of the present invention will be used to produce heat exchangers consisting of more than just two layers.

These aspects provide several advantages. When straight through passageways are used, the heat exchangers of the present invention are much easier to washcoat and/or catalyze. Because there are no bends in the channels of these heat exchangers, the washcoating and catalysing materials flow more smoothly through and adhere more uniformly to each channel interior. Inspection of the heat exchangers is also facilitated in such heat exchangers, since visual inspection is possible.

Because closed channels are used to lay up the individual transverse directional flow layers, the individual layers and the resultant heat exchangers are stronger and more durable, especially prior to firing, than comparable heat exchangers in which ribbed layers are used. The large contacting surface areas of the individual layers promote interlayer bonding, which further increases the overall strength of the fired monolithic ceramic.

By laying up layers having closed-cell channels, a wide variety of different shapes and sizes of channels can be combined to form cross-flow heat exchangers which are suitable for a wide variety of applications. For example, individual directional layers can easily be constructed which consist of one, two, or three layers of parallel inline channels, whose cross-sectional shape may be triangular, square, or rectangular. Alternatively, various combinations of these layers can be combined to form a wide variety of cross-flow heat exchangers, such as, for example, a heat exchanger having double layers of square cross-section channels in one direction of flow, and single or triple layers of rectangular or triangular cross-section channels in another direction of flow.

By using double layered individual cross-flow layers, the speed of the manufacturing process of the present invention is greatly increased. Such individual directional layers having two or more layers of channels can be easily produced using conventional extrusion techniques.

### BRIEF DESCRIPTION OF THE DRAWINGS

FIGURE 1A is a perspective view of an extruded single-celled directional layer, having triangular channels, for use in preparing cross-flow heat exchangers in accordance with the present invention.

FIGURE 1B is a perspective view of an extruded single-celled directional layer, having square channels, for use in preparing cross-flow heat exchangers in accordance with the present invention.

FIGURE 1C is a perspective view of an extruded double-celled directional layer, having square channels, for use in preparing cross-flow heat exchangers in accordance with the invention.

FIGURE 2 is a schematic perspective view illustrating a heat exchanger made in accordance with the method of the present invention, using the double-celled layer extruded body illustrated in Fig. 1C.

### DETAILED DESCRIPTION OF THE DRAWINGS

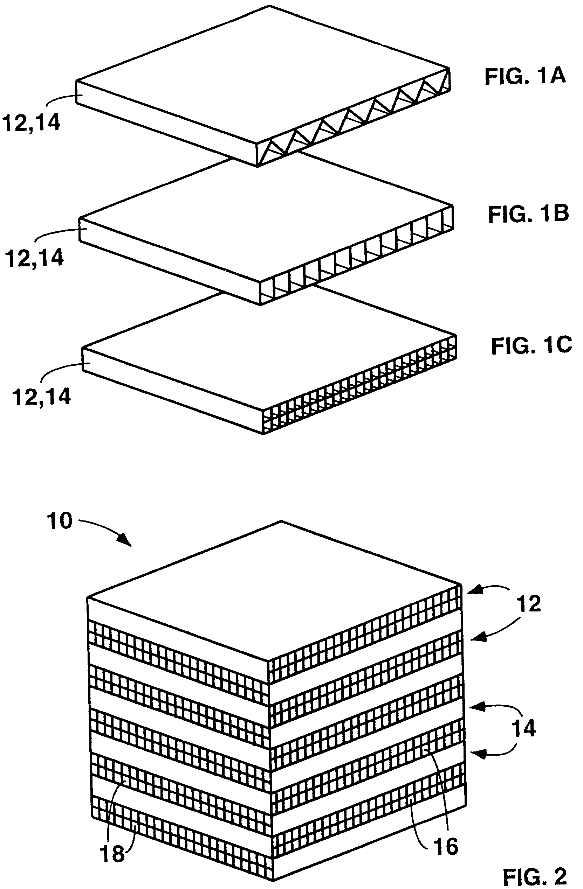

FIGURES 1A-1C illustrate perspective views of different extruded directional flow layers which may be used to manufacture cross-flow heat exchangers in accordance with the present invention. As illustrated in FIGURES 1A-1C, each directional layer 12 and/or 14 consists of a layer of connected and elongated closed channels, each channel having an inlet and an outlet end. Although the channels preferably have a square cross-section, as illustrated in Figs. 1B and 1C, they may alternatively have other cross-sectional shapes, such as, for example, triangular, as illustrated in Fig. 1A, or rectangular. Each of the directional layers utilized to manufacture the cross-flow heat exchangers may consist of single layers of channels, as illustrated in FIGURES 1A and 1B, or alternatively, each of the directional layers my consist of double layers (or triple, quadruple, etc., layers) of channels such as is illustrated in FIGURE 1C. Where less heat transfer efficiency is acceptable, directional layers made up of double, triple, or quadruple layers are adequate.

The closed-cell directional layers 12 and 14 may be formed by casting, molding, or other suitable ceramic forming techniques for forming such closed-cell layers. A preferred method of forming is extrusion. Individual layers may be formed, for example, by extruding a single or double layer of closed cells by placing an appropriate mask over a conventional honeycomb-type extrusion die. Preferably, the extrusion dies are specially designed to create the one, two or three layer extruded body desired.

Layers having different shapes and sizes of channels may be combined to produce heat exchangers which offer different combinations of pressure drop, strength and heat transfer efficiency to suit particular applications. FIGURE 2 is a perspective view illustrating one embodiment of cross-flow heat exchanger 10 in accordance with the present invention. Heat exchanger 10 is made up of a plurality of stacked directional layers 12 and 14, having straight-through flow channels of alternating direction. In the embodiment illustrated in FIG. 2, each directional layer 12 and 14 consists of a double layer of square cells, as is illustrated in FIG. 1C. However, other layers, such as those illustrated in FIG. 1A and 1B, could also be utilized, as could varying combinations of such layers. In a preferred embodiment, single layers of square cells, as illustrated in FIG. 1B, are stacked transversely to one another.

In prior art cross-flow heat exchangers, the direction of flow alternated in every other alternating layer of channels, so that heat exchanging ability would be maximized. The utilization of two or more adjacent undirectional layers for each directional layer, each directional layer in turn alternating in directions, was avoided, since the heat exchanging capacity in such devices was lowered. However, in some instances, depending on the application, such a lowering of heat exchanging capacity is acceptable. Further, in the method of the present invention, in which layers of extruded bodies are assembled on top of one another, if a plurality of stacked channels can be utilized in each directional layer, each directional layer then being stacked transversely to the next, the speed of the manufacturing process can be greatly increased. Another advantage to using such double celled layers is that, when such layers are stored or stacked prior to being fired into heat exchangers, directional layers which have more than one layer of channels are more rugged than those which have only one row of channels. Such a heat exchanger, having two parallel layers of channels in each directional layer, is illustrated in FIGURE 2. Note that in the case of the heat exchanger illustrated in FIGURE 2, one wall of each channel is in communication with one wall of a channel flowing in a transverse direction.

As mentioned above, the channel cross-section of the different directional layers 12 and 14 need not be the same. Depending on the particular application and the particular heat transfer fluid to be used, a single layer of triangular shaped channels may be used for one flow direction, and a double layer of square shaped channels used for the other direction, for example, or alternatively, variations in cell shape and/or size could be used to achieve whatever effect is desired.

Layers 12 and 14 are positioned and contacted with one another so that the channels in layers 12 and 14 are transverse to one another, thereby forming a cross-flow structure having first and second pairs of opposing faces 16 and 18 defining channel openings therein, for the passage of heat transfer fluids, in directions transverse to one another. The first fluid transfers heat to the second fluid during passage through the cells. Typically, in operation each pair of faces has a hot face and a cold face, the hot face of the first pair usually being the inlet face for the first fluid and the hot face of the second pair being the outlet face for the second fluid.

A preferred forming material, especially when the heat exchanger is used as a catalytic converter, is cordierite. However, a variety of other useful materials, such as, for example, silicon nitride, silicon carbide, lithium alumino-silicate, mullite, zircon, and so forth, could also be employed. However, this list is not all-inclusive, and other alternative materials could also be employed.

In a preferred method for forming heat exchangers according to the present invention, layers 12 and 14 are stacked in transverse relation while in the green state. The "green" state is the state which the layers 12 and 14 are in prior to firing. It is also preferred that layers 12 and 14 be stacked prior to drying. However, neither of these steps are critical, and layers 12 and 14 could alternatively be stacked in the dried or fired state. As illustrated in FIG. 2, the directional layers 12 and 14 are stacked so that the flow direction of their respective channels is transverse to one another.

Preferably, the stacked layers are sealed in the green state, prior to firing, by coating the contacting surface of one or both layers with water or a compatible ceramic cement prior to or during stacking. In a preferred embodiment, at least one of the joining surfaces of the stacked layers is coated with water prior to stacking. It has been found that, for cordierite layers in particular, when stacked in the green, unfired state, this technique achieves excellent results.

Compatible ceramic cements include, for example, mullite or alumina powder mixed together with a binding agent and a vehicle such as water. A preferred cement mix is a water thinned paste made of the same batch material as the extruded layers. The ceramic cement may be of a composition having a lower melting point than that of the layer composition so that at the firing temperatures encountered in later stages of processing, the cement will assume a plastic state, flowing into irregularities in the contacting surfaces of the layers and thereby achieving an adequate seal between the layers.

In a preferred embodiment, the layers are slid or moved against one another during the stacking process to improve the bond between the two layers. However, this is not essential.

After the directional layers 12 and 14 have been stacked, the assembly is preferably dried to remove excess moisture from the green body. After drying, the stacked body is fired for a time and temperature which is sufficient to form a ceramic monolithic. Such time and temperature relationships vary for the particular material being used, as is well known in the art.

After firing, the fired ceramic monolithic may be cut, if necessary, to the desired dimensions using a diamond, carbide, or other suitable saw. Alternatively, the final cutting procedure may be carried out prior to the firing step.

A preferred application may be carried out prior to the firing step.

A preferred application for the heat exchangers of the present invention is as a catalytic converter in an exhaust gas system. In such applications, the heat exchangers are typically washcoated and catalyzed. Washcoating involves coating the insides of the flow channels with a slurry, typically of Al₂O₃ particles, to increase surface area and thereby promote catalytic activity. Catalyzing typically involves coating noble metal catalysts onto the oxide support materials (left by washcoating) by contacting the heat exchangers with an aqueous alkaline solution containing the noble metal cations. In the heat exchangers of the present invention which consist of channels having straight flow paths, these washcoating and catalyzing processes are greatly facilitated and the speed with which these processes can be achieved is greatly increased. Inspection is likewise facilitated since visual inspection is made possible by the straight flow paths.

Applications for the heat exchangers of the present invention are not limited to catalytic converters in exhaust systems, but could also be, for example, furnace heat recuperators, turbine engine recuperators, process fluid heating or cooling, or as cross-flow filters or bleed-through reactors. Similarly, the fluids transportable through these heat exchangers are not limited to gases, and therefore alternative cooling or heating fluids such as heat transfer oil, and so forth, could be utilized.

## Claims

1. A method for preparing a cross-flow ceramic heat exchanger comprising:
contacting a first directional layer of fluid flow passages with at least a second directional layer fluid flow passages, at least some of the passages of said first and second layers comprising closed passages disposed between open and opposite ends, said first and second layers arranged so that the passages of the first layer are transverse to the passages of the second layer thereby forming a layered structure; and
firing the layered structure at a temperature and for a time sufficient to form a monolithic ceramic structure.

2. The method of claim 1, wherein each of said first and second directional layers comprise flow passages which are straight and parallel to other passages in the same layer.

3. The method of claim 1, wherein each of said passages comprise a plurality of elongated flat surfaces defining a channel having open and opposite ends.

4. The method of claim 3, wherein said passages comprise a rectangular, triangular, circular or square cross section.

5. The method of claim 1, wherein said first and second layers each comprise a pair of major surfaces, said passages of each layer located between said major surfaces of each layer, said major surfaces being at least substantially flat.

6. The method of any one of claims 1-5, wherein said layers are composed of a material selected from the group consisting of cordierite, silicon nitride, silicon carbide, lithium alumino-silicate, mullite, and zircon.

7. The method of claim 6, further comprising, prior to said contacting step, applying water and/or a cement of mullite, alumina, or extrusion batch with vehicle, to at least one of said major surfaces.

8. The method of claim 1, wherein at least said first directional layer comprises a plurality of layers of straight, parallel fluid flow passages.

9. The method of claim 1, wherein all of the passages of said first directional layer and said at least a second direction layer are closed passages, optionally all of said directional layers comprising a simple layer of straight, parallel fluid flow passages.

10. The method of any one of the preceding claims, wherein prior to said contacting, said first and second directional layers are formed by extrusion.

11. A heat exchanger comprising:
a first directional flow layer comprising at least a first and a second channel layer, said first channel layer comprising a plurality of straight channels arranged adjacent to one another in a first plane, said second channel layer comprising a plurality of straight channels arranged adjacent to one another in a second plane, said first plane adjacent to said second plane, the channels of said first layer parallel to the channels of said second layer,
a second directional flow layer comprising at least a third channel layer, said third channel layer comprising a plurality of channels arranged adjacent to one another in a third plane,
said first directional flow layer adjacent to said second directional flow layer, the channels of said first directional flow layer transverse to the channels of said second heat exchanger layer.

12. The heat exchanger of claim 11, said second directional flow layer further comprising a fourth channel layer, said fourth channel layer in communication with said third channel layer, said fourth channel layer comprising a plurality of channels arranged adjacent to one another in a fourth plane, the channels of said third layer parallel to the channels of said fourth layer.

13. The heat exchanger of claim 14, wherein the channels of said first and second heat exchanger layers are straight and/or the cross-section of said channels is square, rectangular, or triangular.
